# EUROPEAN PATENT SPECIFICATION

(11) **EP 2 523 255 B1**
(45) Date of publication and mention of the grant of the patent: **31.12.2014**
(21) Application number: 12742772.2
(22) Date of filing: 01.02.2012
(51) Int. Cl.: H01Q 7/06, G06K 19/07, G06K 19/077, H01Q 1/24, H01Q 7/00, H01Q 1/22, H01Q 1/40, H01Q 7/08, H01Q 9/27

(54) **ANTENNA DEVICE AND COMMUNICATION TERMINAL DEVICE**
ANTENNENVORRICHTUNG UND KOMMUNIKATIONSENDGERÄT
DISPOSITIF D'ANTENNE ET DISPOSITIF FORMANT TERMINAL DE COMMUNICATION

(30) Priority: 15.02.2011 JP 2011029315
(43) Date of publication of application: 14.11.2012
(73) Proprietor: Murata Manufacturing Co., Ltd., Nagaokakyo-shi, Kyoto 617-8555 (JP)
(72) Inventor: MIURA Teppei, Nagaokakyo-shi, Kyoto 617-8555 (JP); IKEMOTO Nobuo, Nagaokakyo-shi, Kyoto 617-8555 (JP); SASAKI Jun, Nagaokakyo-shi, Kyoto 617-8555 (JP); KATO Noboru, Nagaokakyo-shi, Kyoto 617-8555 (JP); TSUBAKI Nobuhito, Nagaokakyo-shi, Kyoto 617-8555 (JP)
(74) Representative: Schenk, Markus
(86) International application number: PCT/JP2012/052217
(87) International publication number: WO 2012/111430

(56) References cited:
- WO-A1-89/07347
- WO-A1-2007/013338
- WO-A1-2010/122685
- WO-A1-2010/122888
- WO-A1-2012/033031
- JP-A- H1 125 244
- JP-A- 2002 157 559
- JP-A- 2009 044 715
- JP-A- 2009 182 630
- JP-A- 2010 109 674
- JP-A- 2011 199 343
- JP-A- 2011 211 611

## Description

### Technical Field

The present invention relates to antenna devices and communication terminal apparatuses and, in particular, to an antenna device and communication terminal apparatus used in a communication system in the high-frequency (HF) range.

### Background Art

A radio-frequency identification (RFID) system for exchanging information between a reader-writer and an RFID tag by non-contact communications between the reader-writer and the RFID tag and a near field communication (NFC) system for carrying out communications between two communication apparatuses at a short range are known. An RFID system and a near field communication system that use the HF range, for example, 13.56 MHz range as the communication frequency employ antennas coupled to each other mainly through an induction field.

In recent years, some communication terminal apparatuses, such as cellular phones, have introduced an RFID system or a near field communication system, and the communication terminal apparatuses have been used as an RFID tag and a reader-writer used therefor or been used as terminals in near field communication. A magnetic antenna is known as an antenna device for use in transmitting and receiving a radio-frequency signal in the HF range. The magnetic antenna has a structure in which a coil conductor is wound around the surface of a magnetic core, as described in, for example, Patent Document 1 and Patent Document 2.

Fig. 1 is an exploded perspective view of a magnetic antenna in Patent Document 2. The magnetic antenna is a laminate that includes a plurality of magnetic layers 5 in which a coil 4 made up of electrode layers 2 and through holes 1 is disposed, insulating layers 6 sandwiching the upper and lower surfaces of the coil 4, and a conductive layer 7 disposed on the upper surface of one or more of the insulating layers.

### Citation List

### Patent Document

Patent Document 1: Japanese Unexamined Patent Application Publication No. 2005-317674
Patent Document 2: Japanese Unexamined Patent Application Publication No. 2007-019891
WO2010/122685 A1 discloses an antenna apparatus, in which a coil conductor is provided on a magnetic sheet, wherein a flexible substrate is arranged between the coil conductor and the magnetic sheet. The coil conductor and an inner edge forming an opening of a conductor layer formed on an outer face of a casing overlap at least partially.

### Summary of Invention

### Technical Problem

In a system that uses the HF range as the communication frequency, the communication distance between the antenna devices depends on magnetic flux passing through the coil antennas. That is, to ensure some communication distance between the antenna devices, it is necessary to have a large size of each of the coil antennas. The large size of the coil antenna hinders miniaturization of the communication terminal apparatus. In contrast, if the antenna is small, the effective area of the antenna is small and the communication distance is not sufficient.

The present invention is made in light of the above-described circumstances. It is an object of the present invention to provide an antenna device having a small footprint and a small-sized communication terminal apparatus while a predetermined communication distance is ensured. Solution to Problem

This object is achieved by an antenna device according to claim 1.

An antenna device according to the present invention includes a coil antenna and a booster antenna. The coil antenna includes a coil conductor wound around a winding axis and a magnetic body arranged at least inside a winding region of the coil conductor, the coil antenna being mounted such that the winding axis passes through a mounting surface plane thereof. The booster antenna includes a planar conductor patch functioning as a booster coupled to the coil antenna through an electromagnetic field. A part of the coil conductor and an outer edge of the planar conductor patch overlap each other at least in part when seen in plan view in a direction of the winding axis. The planar conductor patch is disposed on an outer surface of a printed wiring board or disposed inside the printed wiring board, and the coil antenna is surface-mounted on the printed wiring board.

A communication terminal apparatus according to the present invention includes such an antenna device and a communication circuit. The communication circuit is connected to the antenna device.

### Advantageous Effects of Invention

The antenna device according to the present invention includes the coil antenna and the planar conductor. Accordingly, the antenna device having a small footprint while a predetermined communication distance is ensured can be achieved, and the small-sized communication terminal apparatus can also be achieved.

### Brief Description of Drawings

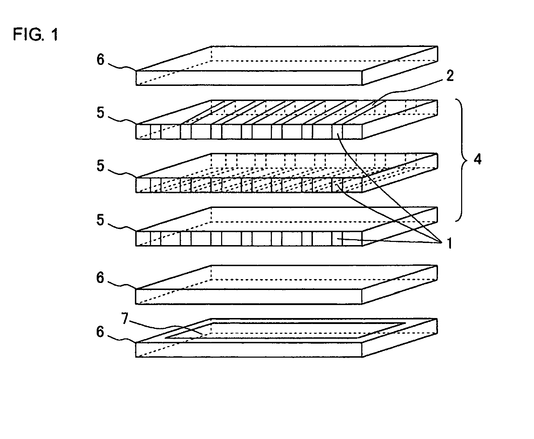

[Fig. 1] Fig. 1 is an exploded perspective view of a magnetic antenna in Patent Document 2.
[Fig. 2] Fig. 2(A) is a perspective view of an antenna device 201 according to a first embodiment, Fig. 2(B) is a plan view of the antenna device 201, and Fig. 2(C) is a front view of the antenna device 201.
[Fig. 3] Fig. 3(A) is a perspective view that illustrates the direction of each of a current passing through a coil conductor of a coil antenna 100 in the antenna device 201, a current passing through a planar conductor 11, a magnetic field resulting from the coil antenna 100, and a magnetic field resulting from the planar conductor 11, and Figs. 3(B) and 3(C) illustrate the relationship between a current passing through the planar conductor 11 and magnetic flux produced by it.
[Fig. 4] Fig. 4(A) is a cross-sectional view of a communication terminal apparatus 301 including the antenna device 201, and Fig. 4(B) is a see-through plan view of the communication terminal apparatus 301.
[Fig. 5] Fig. 5 is a see-through perspective view that illustrates a used state of a communication terminal apparatus according to a second embodiment.
[Fig. 6] Fig. 6 is an exploded perspective view of an example of an antenna device 203.
[Fig. 7] Fig. 7(A) is a perspective view of an antenna device 204 according to a third embodiment, and Fig. 7(B) is a front view that illustrates a state in which the antenna device 204 is incorporated in a communication terminal apparatus.
[Fig. 8] Figs. 8(A) and 8(B) are front views of two antenna devices 205A and 205B according to a fourth embodiment, respectively.
[Fig. 9] Fig. 9(A) is a perspective view of a resonant booster antenna 110, Fig. 9(B) is an exploded perspective view of the resonant booster antenna 110, and Fig. 9(C) is a plan view of the resonant booster antenna 110.
[Fig. 10] Fig. 10 is an equivalent circuit diagram of the resonant booster antenna 110.
[Fig. 11] Figs. 11(A) to 11(D) are front sectional views of four communication terminal apparatuses 306A, 306B, 306C, and 306D according to a fifth embodiment, respectively.
[Fig. 12] Fig. 12(A) is an exploded perspective view of a resonant booster antenna 120 according to a sixth embodiment, and Fig. 12(B) is a plan view of the resonant booster antenna 120.
[Fig. 13] Fig. 13 is an equivalent circuit diagram of the resonant booster antenna 120.

### Description of Embodiments

Antenna devices and communication terminal apparatuses according to embodiments described below are used in a radio-frequency identification (RFID) system in the HF range, such as a near field communication (NFC) system.

### «First Embodiment»

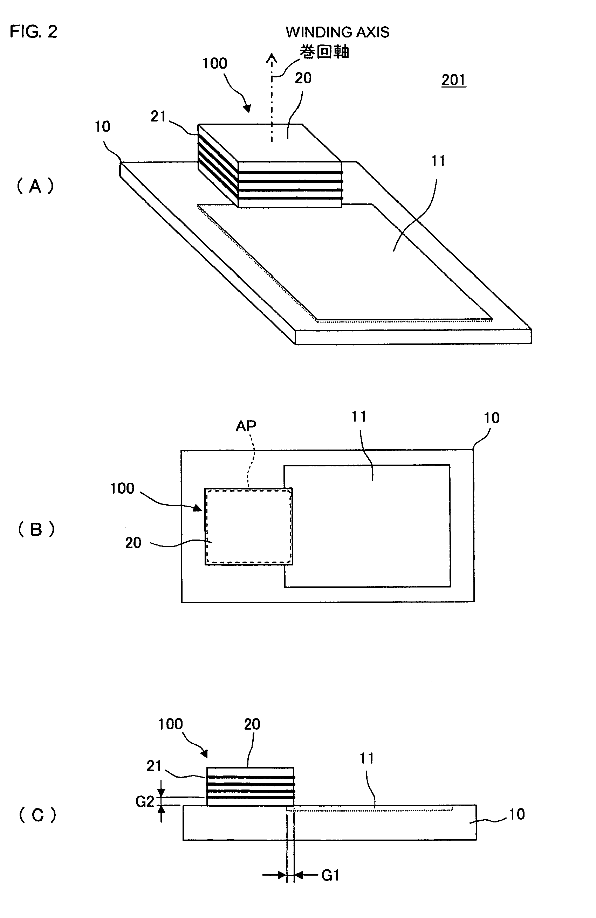

Fig. 2(A) is a perspective view of an antenna device 201 according to a first embodiment, Fig. 2(B) is a plan view thereof, and Fig. 2(C) is a front view thereof.

The antenna device 201 includes a booster antenna including a planar conductor 11 and a coil antenna 100. The coil antenna 100 has a structure in which a coil conductor 21 is wound around a magnetic core 20.

The coil antenna 100 is surface-mounted on a base 10 including a printed wiring board made of, for example, epoxy resin such that the mounting surface is a conductor aperture plane AP (see Fig. 2(B)), the conductor aperture plane AP being a plane through which the winding axis of the coil conductor 21 passes.

Specifically, the coil antenna 100 has a structure in which the coil conductor 21 made of, for example, silver or copper is wound around the magnetic core 20 made of, for example, ferrite. The coil conductor 21 is wound around four side surfaces (peripheral surfaces) perpendicular to two major surfaces (one of which is the conductor aperture plane AP) of the magnetic core 20 having the shape of a rectangular parallelepiped. That is, the winding axis of the coil conductor 21 extends along the direction orthogonal to the major surfaces of the magnetic core 20.

The magnetic core 20 in the coil antenna 100 includes a ferrite sinter or a resin body in which a ferrite material is distributed in resin. The coil conductor 21 may further be overlaid with a protective film made of an insulating material having low permeability.

The coil antenna 100 is configured as a so-called surface-mounted coil antenna (chip coil antenna). Two mounting terminal electrodes (not illustrated) connected to first and second ends of the coil conductor 21, respectively, are disposed on the back surface of the coil antenna 100. That is, the coil antenna 100 is configured such that it can be surface-mounted on various substrates, including a printed wiring board.

The planar conductor 11 is configured so as to be made of foil of metal, such as copper, silver, or aluminum, and have a rectangular shape and is disposed on the surface of the base 10 including a printed wiring board. The base 10 is not limited to a rigid printed wiring board and may be made of flexible resin. The planar shape of the planar conductor is not limited to a rectangular shape and can have any shape, such as a circular shape or a diamond shape. The planar conductor is not limited to a planar thin metal film and may be a part of a metal item.

The coil antenna 100 is arranged such that a part of the coil conductor 21 and an edge of the planar conductor 11 overlap each other when seen in plan view in the direction of the winding axis. In the example illustrated in Fig. 2(C), the part of the coil conductor 21 in the coil antenna 100 extends into the region where the planar conductor 11 is formed by the dimension G1. The outer surface of the planar conductor 11 and the lower end of the coil conductor 21 are separated from each other by the height G2. Smaller dimensions G1 and G2 may be preferable because they lead to a stronger coupling degree between the coil antenna 100 and the booster antenna. As described below, the booster antenna including the planar conductor 11 is coupled to the coil antenna 100 through an electromagnetic field.

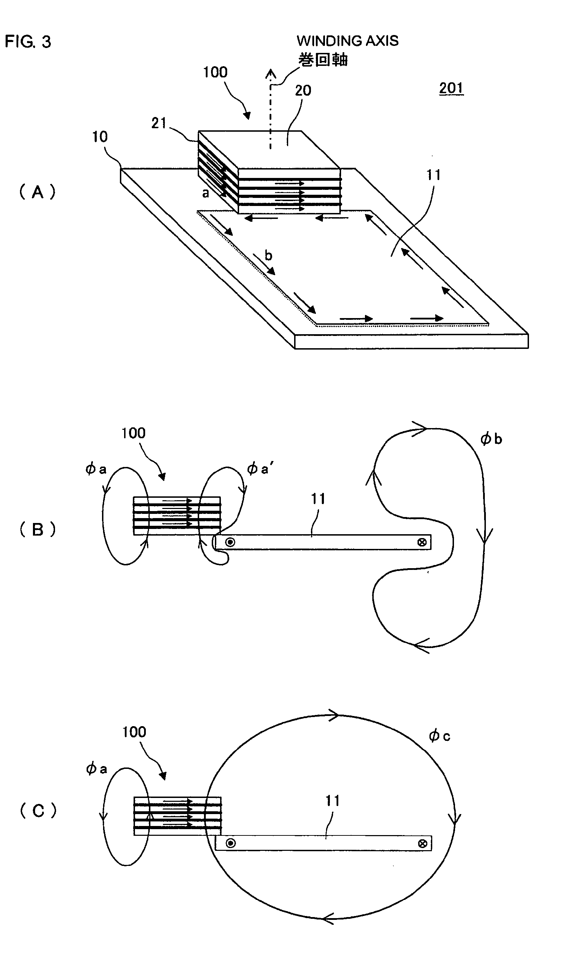

Fig. 3(A) is a perspective view that illustrates the direction of each of a current passing through the coil conductor 21 of the coil antenna 100 in the antenna device 201 and a current passing through the planar conductor 11. Figs. 3(B) and 3(C) schematically illustrate states of the current passing through the coil conductor 21 of the coil antenna 100, the current passing through the planar conductor 11, and magnetic flux produced by them.

When a current passes through the coil conductor 21 in the direction of the current "a", a current is induced in the planar conductor 11 in the direction of the current "b". That is, the current passing through the coil conductor 21 makes the induced current b circulate in the periphery of the planar conductor. As a result, as illustrated in Fig. 3(B), magnetic flux indicated by the arrow φa occurs to the coil antenna 100 and magnetic flux indicated by the arrow φb occurs to the planar conductor 11. The magnetic flux φa' illustrated in Fig. 3(B) indicates magnetic flux that does not pass through the planar conductor 11.

Fig. 3(C) depicts the magnetic flux indicated in Fig. 3(B) more equivalently. The magnetic flux indicated by the arrow φc is the one in which the magnetic flux B occurring to the vicinity of the planar conductor 11 and the magnetic flux φa' occurring to the coil antenna 100 are combined.

When magnetic flux is received from a coil antenna of a communication partner, the phenomenon opposite to the above arises. That is, when magnetic flux of the coil antenna of the communication partner flows in the vicinity of the planar conductor 11 and links the coil antenna 100, the current b passes through the planar conductor 11 and the current a passes through the coil conductor 21.

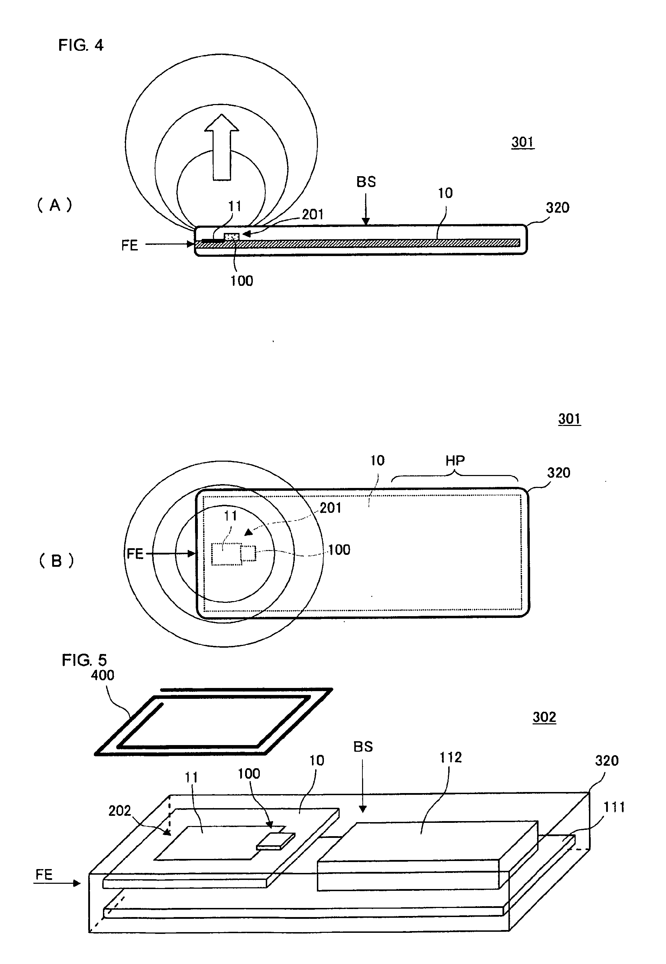

Fig. 4(A) is a cross-sectional view of a communication terminal apparatus 301 including the antenna device 201, and Fig. 4(B) is a see-through plan view thereof. The base 10 is a printed wiring board. The planar conductor 11 is disposed on the surface of the base 10. The coil antenna 100 is surface-mounted on the base 10.

As illustrated in Fig. 3(C), the magnetic flux resulting from the coil antenna 100 and the magnetic flux resulting from the planar conductor 11 are combined into the large magnetic flux in the direction of the arrow illustrated in Fig. 4(A). Therefore, the antenna device 201 has the directivity in the direction of the arrow illustrated in Fig. 4(A). That is, the antenna device 201 obtains a high gain in the direction from the vicinity of the front end FE of a terminal casing 320 of the communication terminal apparatus 301 toward the back surface BS. Accordingly, when a user grips the hand-held portion HP of the communication terminal apparatus 301 and holds the front end over the communication partner, communication can be carried out under the high gain.

### «Second Embodiment»

Fig. 5 is a see-through perspective view that illustrates a used state of a communication terminal apparatus according to a second embodiment. The communication terminal apparatus 302 can be a cellular phone terminal, for example. The communication terminal apparatus 302 contains a main substrate 111 and the base 10 as a sub-substrate in the terminal casing 320. An antenna device 202 is disposed on the surface of the base 10. The antenna device 202 is arranged on the back surface BS side of the terminal casing 320 together with a battery pack 112. The main substrate 111 is a large printed wiring board formed from a rigid resin substrate made of, for example, epoxy resin. Circuit elements that form, for example, a circuit for driving a display device and a circuit for controlling the battery are mounted on the main substrate 111. The base 10 as the sub-substrate includes a flexible resin substrate made of, for example, a polyimide or liquid crystal polymer. In addition to the antenna device 202, circuit elements that form a communication circuit (RF circuit) and other circuits are mounted on the base 10. Alternatively, these circuit elements may be mounted on the main substrate 111.

The above-described communication circuit includes, for example, a wireless IC chip and is connected to (receives electricity from) the antenna device 202. The wireless IC chip and the antenna device 202 form RFID.

When the communication terminal apparatus 302 is held over a coil antenna 400, such as a reader-writer, of a communication partner, as illustrated in Fig. 5, the antenna device 202 and the coil antenna 400 of the communication partner are coupled to each other mainly through an induction field and exchange predetermined information, and the communication terminal apparatus 302 functions as RFID.

### «Example»

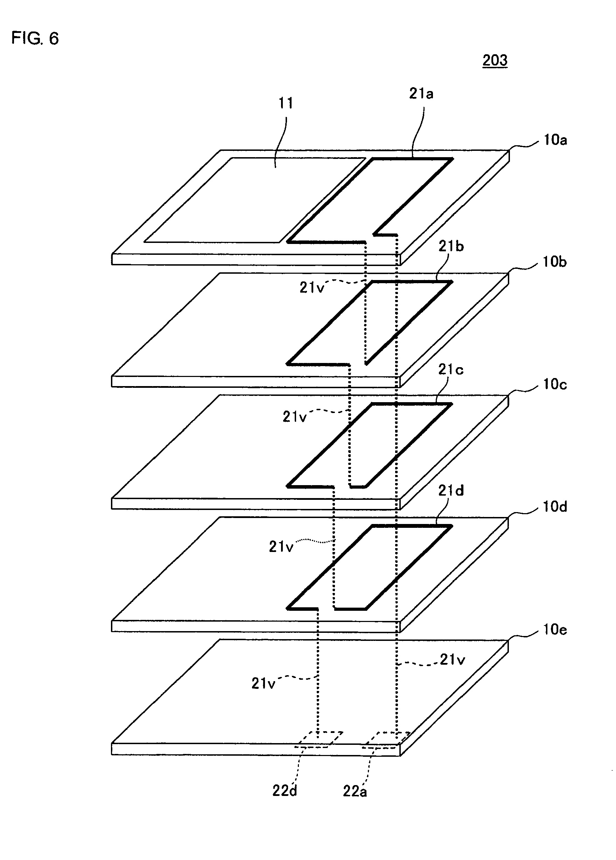

Fig. 6 is an exploded perspective view of an example of an antenna device 203. The antenna device 203 includes a multilayer substrate in which base layers 10a, 10b, 10c, 10d, and 10e formed from a magnetic body are stacked. Loop conductive patterns 21a to 21d are disposed on the base layers 10a to 10d, respectively. Input and output terminals 22a and 22d to be connected to a feeder circuit are disposed on a first major surface of the base layer 10e. Via conductors 21v are disposed in the base layers 10a to 10e, and the conductive patterns 21a to 21d and the via conductors 21v form a single coil conductor.

The planar conductor 11 is disposed on a second major surface of the base layer 10a. The planar conductor 11 is disposed such that its edge is arranged in close vicinity of the coil opening of the coil conductor. Therefore, the antenna device is configured such that the coil antenna and the planar conductor are integrated in the multilayer substrate.

It is not necessary that all of the base layers 10a to 10e are magnetic layers. For example, the base layer 10a may be a non-magnetic layer. When the base layer 10a is a non-magnetic layer, a high degree of coupling between the coil conductor and the planar conductor 11 (booster antenna) is obtainable.

### «Third Embodiment»

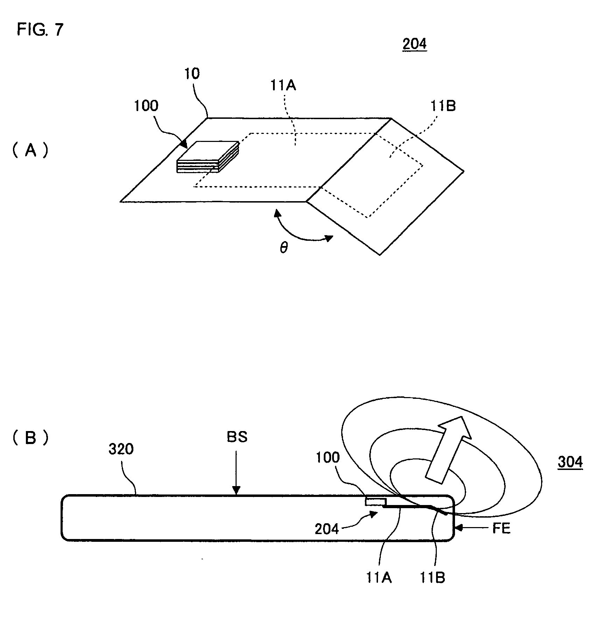

Fig. 7(A) is a perspective view of an antenna device 204 according to a third embodiment. Fig. 7(B) is a front view that illustrates a state in which the antenna device 204 is incorporated in a communication terminal apparatus 304.

As illustrated in Fig. 7(B), the antenna device 204 is arranged in a location adjacent to the front end FE in the terminal casing 320 of the communication terminal apparatus 304. Thus, when the front end FE of the communication terminal apparatus 304 is made to approach (is held over) a communication partner, such as an antenna of a reader-writer, stable communication can be carried out.

In the antenna device 204 according to the present embodiment, the coil antenna 100 is arranged on an edge of a first planar conductor region 11A. The first planar conductor region 11A and a second planar conductor region 11B are disposed on the planes intersecting at a predetermined angle θ, respectively. In this case, the directivity of the antenna device 204 occurs in an intermediate direction between the direction of the normal to the first planar conductor region 11A and the direction of the normal to the second planar conductor region 11B, and the communication distance in this direction can be increased.

That is, as illustrated in Fig. 7(B), the antenna device 204 is arranged such that the second planar conductor region 11B of the antenna device 204 is adjacent to the front end FE of the terminal casing 320 in the communication terminal apparatus. Thus, the antenna device 204 can have a high sensitivity in a range from the direction of the front end FE of the terminal casing 320 toward the direction of the back surface BS.

To prevent an increase in the loss of a current passing through each of the planar conductor regions 11A and 11B, the angle θ formed between the first planar conductor region 11A and the second planar conductor region 11B may preferably be larger than 90° and smaller than 135°.

### «Fourth Embodiment»

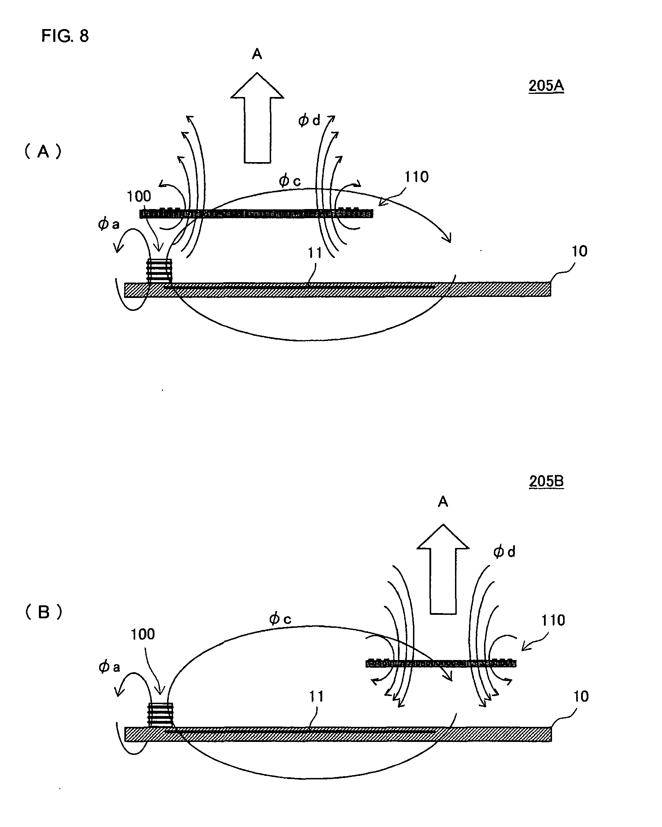

Figs. 8(A) and 8(B) are front views of two antenna devices 205A and 205B according to a fourth embodiment, respectively. Each of the antenna devices 205A and 205B according to the fourth embodiment is the one in which the antenna device 201 illustrated in the first embodiment further includes a resonant booster antenna 110. This resonant booster antenna corresponds to "planar coil antenna" in the present invention. The resonant booster antenna 110 is coupled to the coil antenna 100 through a magnetic field and acts as a booster antenna, and the detailed configuration of the resonant booster antenna 110 is described below. In the example illustrated in Fig. 8(A), the resonant booster antenna 110 is parallel to the planar conductor 11 and is arranged in a location adjacent to the coil antenna 100 with respect to the center of the planar conductor 11. Thus, as illustrated in Fig. 8(A), the resonant booster antenna 110 is coupled to the magnetic flux φc resulting from the coil antenna 100 through a magnetic field and acts as an antenna device having the directivity in the direction of the arrow A.

In the example illustrated in Fig. 8(B), the resonant booster antenna 110 is parallel to the planar conductor 11 and is arranged in a location remote from the coil antenna 100 with respect to the center of the planar conductor 11. That is, the resonant booster antenna 110 is arranged in a location adjacent to a side of the planar conductor, the side being opposite to another side close to the coil antenna 100. Thus, as illustrated in Fig. 8(B), the resonant booster antenna 110 is coupled to the magnetic flux φc resulting from the coil antenna 100 through a magnetic field and acts as an antenna device having the directivity in the direction of the arrow A.

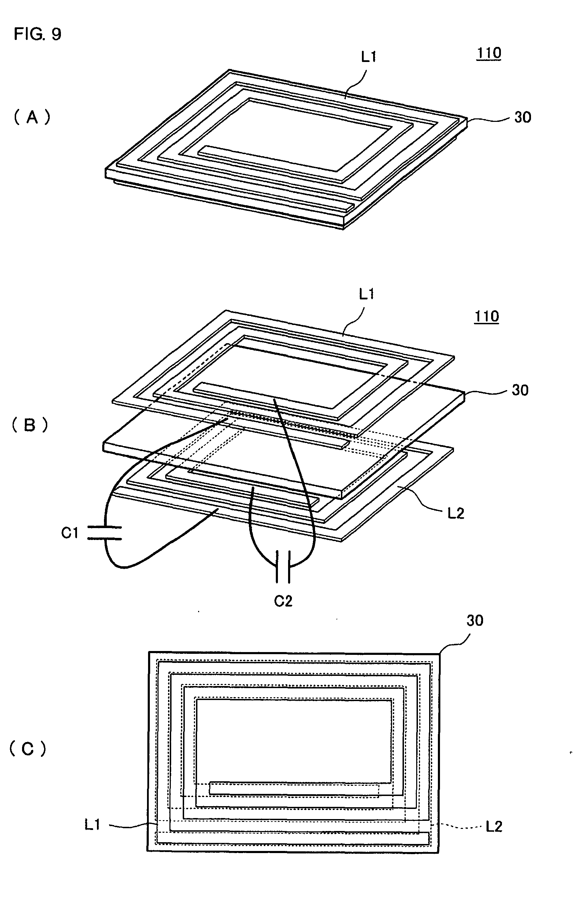

Fig. 9(A) is a perspective view of the resonant booster antenna 110, and Fig. 9(B) is an exploded perspective view of the resonant booster antenna 110. Fig. 9(C) is a plan view of the resonant booster antenna 110. The resonant booster antenna 110 includes a base 30 and rectangular spiral coil conductors L1 and L2 on the base 30. The rectangular spiral coil conductor L1 on the upper surface of the base 30 and the rectangular spiral coil L2 on the lower surface of the base 30 are disposed such that their coil conductors face each other and their winding directions are opposite (the same when seen in plan view in one direction).

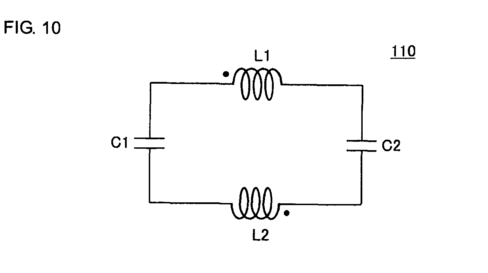

Fig. 10 is an equivalent circuit diagram of the resonant booster antenna 110. In Fig. 10, the inductors L1 and L2 correspond to the above-described rectangular spiral coils L1 and L2. Because the rectangular spiral coils L1 and L2 face each other such that the base 30 is disposed therebetween, capacitances occur between them. The capacitances are indicated by capacitors C1 and C2 in Fig. 10. In such a way, the inductors L1 and L2 and the capacitors C1 and C2 enable the resonant booster antenna 110 to act as an LC resonant circuit. Its resonant frequency is the same as or near the carrier frequency of a communication signal.

As described above, providing the resonant booster antenna arranged so as to be close to the planar conductor enables the communication sensitivity in a desired direction to be improved using the resonant booster antenna, without the use of an additional conductive plate, irrespective of the mounting position of the coil antenna.

### «Fifth Embodiment»

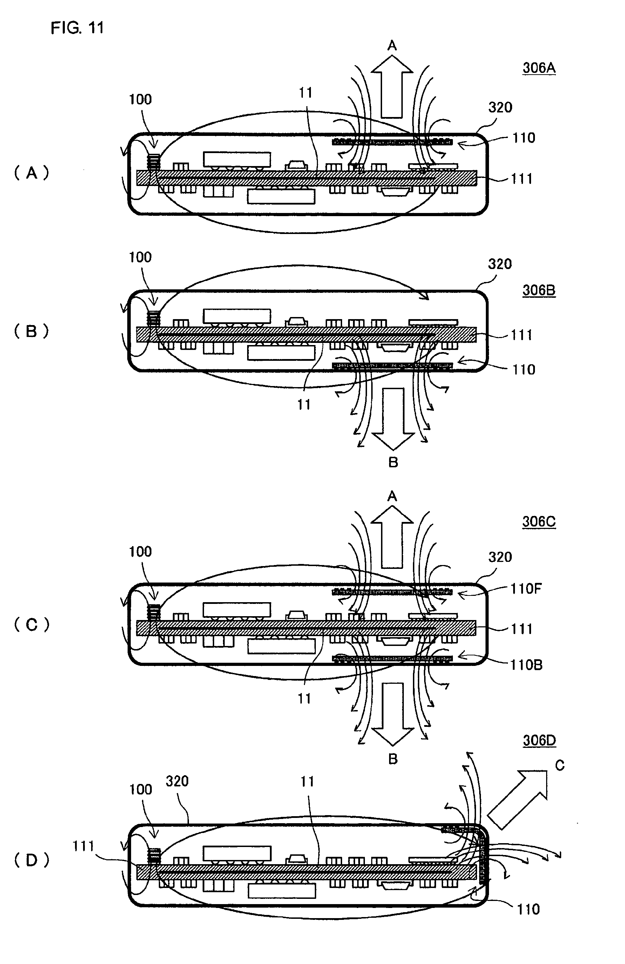

Figs. 11(A) to 11(D) are front sectional views of four communication terminal apparatuses 306A, 306B, 306C, and 306D according to a fifth embodiment, respectively. In these drawings, the main substrate 111, the coil antenna 100, the resonant booster antenna 110, and other elements are contained in the terminal casing 320 of each of the communication terminal apparatuses 306A, 306B, 306C, and 306D. The upper side of the terminal casing 320 in the drawings indicates the bottom of the terminal casing, and the lower side indicates the top (the surface where the display panel and the operating unit are disposed) of the terminal casing.

The planar conductor 11 as a ground conductor is disposed inside the main substrate 111. The coil antenna 100 and many other chip components are mounted on the main substrate 111. The coil antenna 100 is disposed such that a part of the coil conductor and an edge of the planar conductor 11 overlap each other at least in part when seen in plan view in the direction of the winding axis. The resonant booster antenna 110 is attached to or arranged along the inner surface of the terminal casing 320. The resonant booster antenna 110 is parallel to the planar conductor 11 and is arranged in a location remote from the coil antenna 100 with respect to the center of the planar conductor 11.

In the communication terminal apparatus 306A illustrated in Fig. 11(A), the resonant booster antenna 110 is adjacent to the surface of the main substrate 111 on which the coil antenna 100 is mounted. In the communication terminal apparatus 306B illustrated in Fig. 11(B), the resonant booster antenna 110 is adjacent to a surface that is opposite to the surface of the main substrate 111 on which the coil antenna 100 is mounted. In the communication terminal apparatus 306C illustrated in Fig. 11(C), a resonant booster antenna 110F is adjacent to the surface of the main substrate 111 on which the coil antenna 100 is mounted, and a resonant booster antenna 110B is adjacent to a surface that is opposite to the surface of the main substrate 111 on which the coil antenna 100 is mounted. In the communication terminal apparatus 306D illustrated in Fig. 11(D), the resonant booster antenna 110 is arranged along two surfaces (over the ridge) of the terminal casing 320.

In the communication terminal apparatus 306A illustrated in Fig. 11(A), the planar conductor 11 acts as a radiator and the resonant booster antenna 110 also acts as a radiator. Because the resonant booster antenna 110 has a high directivity in the direction of the arrow A, the maximum distance for communication in the direction of the arrow A can be increased.

In the communication terminal apparatus 306B illustrated in Fig. 11(B), because the resonant booster antenna 110 has a high directivity in the direction of the arrow B, the maximum distance for communication in the direction of the arrow B can be increased. Because the planar conductor 11 also acts as a radiator, a gain in the direction opposite to the direction of the arrow B can be ensured.

In the communication terminal apparatus 306C illustrated in Fig. 11(C), the planar conductor 11 acts as a radiator and the resonant booster antennas 110F and 110B also act as radiators. Because the resonant booster antenna 110F has a high directivity in the direction of the arrow A and the resonant booster antenna 110B has a high directivity in the direction of the arrow B, the maximum distance for communication can be increased in both the directions of the arrows A and B.

In the communication terminal apparatus 306D illustrated in Fig. 11(D), the planar conductor 11 acts as a radiator and the resonant booster antenna 110 also acts as a radiator. Because the resonant booster antenna 110 has a high directivity in the direction of the arrow C (direction of 45 degrees), the maximum distance for communication in the direction of the arrow C can be increased.

### «Sixth Embodiment»

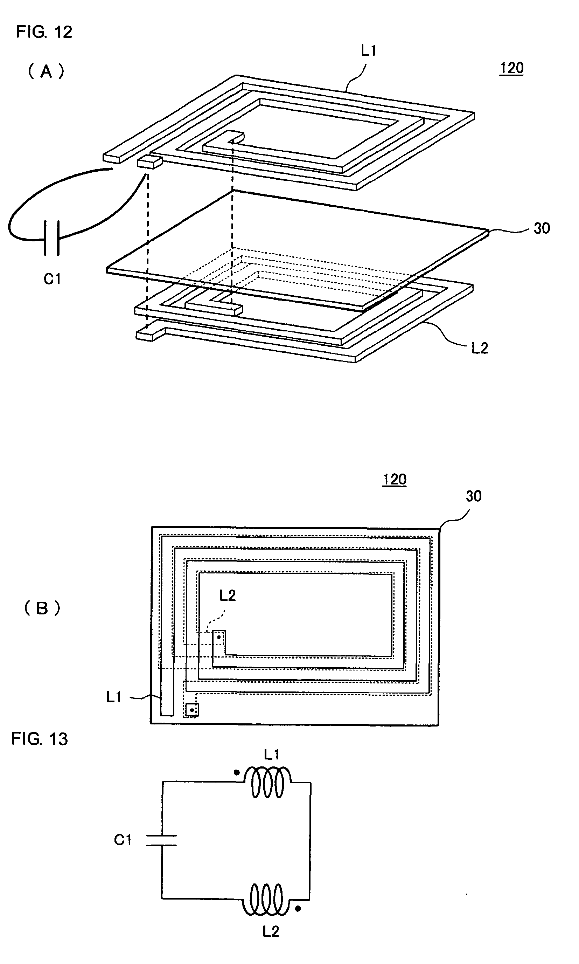

Another example of the resonant booster antenna is described in a sixth embodiment. Fig. 12(A) is an exploded perspective view of a resonant booster antenna 120 according to the sixth embodiment. Fig. 12(B) is a plan view of the resonant booster antenna 120. Fig. 13 is an equivalent circuit diagram of the resonant booster antenna 120.

The resonant booster antenna 120 includes the base 30 and the rectangular spiral coil conductors L1 and L2 on the base 30. The rectangular spiral coil conductor L1 on the upper surface of the base 30 and the rectangular spiral coil conductor L2 on the lower surface of the base 30 are disposed such that their coil conductors face each other and their winding directions are opposite (the same when seen in plan view in one direction). The inner end of the coil conductor L1 is electrically connected to the inner end of the coil conductor L2 with a via conductor disposed therebetween. The capacitor C1 outside the illustration is connected between the outer end of the coil conductor L1 and the outer end of the coil conductor L2.

As illustrated in Fig. 13, the inductors L1 and L2 and the capacitor C1 enable the resonant booster antenna 120 to act as an LC resonant circuit. Its resonant frequency is the same as or near the carrier frequency of a communication signal.

### «Other Embodiments»

In the above embodiments, examples in which the planar conductor 11 is exposed to the exterior of the base 10 are described. Alternatively, the planar conductor 11 may be disposed inside a printed wiring board, for example.

Of the coil conductor (21, which is the corresponding reference numeral in the first embodiment; the same applies to the following), the winding axis may not be perpendicular to the planar conductor (11). It is merely necessary that the coil antenna (100) be mounted such that the mounting surface is the conductor aperture plane AP, which is a plane through which the winding axis of the coil conductor (21) passes, and that the booster antenna including the planar conductor (11) and the coil antenna (100) be coupled together through an electromagnetic field. In particular, when the winding axis of the coil conductor (21) is in an orthogonal relation to the plane of the planar conductor (11), the magnetic flux resulting from the current passing through the coil conductor (21) of the coil antenna (100) and the magnetic flux resulting from the current passing through the planar conductor (11) are in the same direction, the directivity of the antenna device (201) can be increased. Typically, when the angle between the winding axis of the coil conductor (21) and the normal of the planar conductor (11) is in the range of ±45 degrees, satisfactory directivity and gain are obtainable.

The antenna device according to the present invention is not limited to an antenna device for use in the HF range and is also applicable to an antenna device for use in other frequency bands, such as the low frequency (LF) range or the ultrahigh frequency (UHF) range.

### Reference Signs List

- BS: back surface
- FE: front end
- HP: hand-held portion
- 10: base
- 10a, 10b, 10c, 10d, 10e: base layers
- 11: planar conductor
- 11A: first planar conductor region
- 11B: second planar conductor region
- 20: magnetic core
- 21: coil conductor
- 21a: conductive pattern
- 21v: via conductors
- 22a, 22d: electrodes for connection to input and output terminals
- 30: base
- 100: coil antenna
- 110, 120: resonant booster antennas (planar coil antennas)
- 111: main substrate
- 112: battery pack
- 201 to 204: antenna devices
- 301, 302, 304: communication terminal apparatuses
- 320: terminal casing
- 400: coil antenna of communication partner

## Claims

1. An antenna device comprising:
a coil antenna (100) that includes a coil conductor (21) wound around a winding axis and a magnetic body (20) arranged at least inside a winding region of the coil conductor (21), the coil antenna (100) being mounted such that the winding axis passes through a mounting surface plane thereof; and
a booster antenna that includes a planar conductor patch (11) functioning as a booster coupled to the coil antenna (100) through an electromagnetic field,
wherein a part of the coil conductor (21) and an outer edge of the planar conductor patch (11) overlap each other at least in part when seen in plan view in a direction of the winding axis,
wherein the planar conductor patch (11) is disposed on an outer surface of a printed wiring board (10) or disposed inside the printed wiring board (10), and the coil antenna (100) is surface-mounted on the printed wiring board (10).

2. A communication terminal apparatus comprising an antenna device according to claim 1 and a communication circuit connected to the antenna device.

3. The communication terminal apparatus according to Claim 2, further comprising:
an elongated casing (320) that houses the communication circuit, wherein the antenna device is arranged such that the planar conductor patch (11) is adjacent to an end of the casing.

4. The antenna device according to Claim 1, wherein the winding axis of the coil antenna is positioned outside of the outer edge of the planar conductor patch in plan view in a direction of the winding axis.

5. The antenna device according to claim 1, wherein the planar conductor patch is a ground conductor in the printed wiring board.

## Patentansprüche

1. Ein Antennenbauelement, das folgende Merkmale aufweist:
eine Spulenantenne (100), die einen Spulenleiter (21), der um eine Wicklungsachse gewickelt ist, und einen Magnetkörper (20) umfasst, der zumindest innerhalb einer Wicklungsregion des Spulenleiters (21) angeordnet ist, wobei die Spulenantenne (100) derart angebracht ist, dass die Wicklungsachse durch eine Befestigungsoberflächenebene derselben verläuft; und
eine Verstärkerantenne, die ein planares Leiter-Stück (11) umfasst, das als ein Verstärker fungiert, der durch ein elektromagnetisches Feld mit der Spulenantenne (100) gekoppelt ist,
wobei ein Teil des Spulenleiters (21) und ein äußerer Rand des planaren Leiter-Stücks (11) einander bei Draufsicht in einer Richtung der Wicklungsachse zumindest teilweise überlappen,
wobei das planare Leiter-Stück (11) an einer Außenoberfläche einer gedruckten Verdrahtungsplatine (10) angeordnet ist oder im Inneren der gedruckten Verdrahtungsplatine (11) angeordnet ist und die Spulenantenne (100) an der gedruckten Verdrahtungsplatine (10) oberflächenbefestigt ist.

2. Eine Kommunikationsendgerätvorrichtung mit einem Antennenbauelement gemäß Anspruch 1 und einer Kommunikationsschaltung, die mit dem Antennenbauelement verbunden ist.

3. Die Kommunikationsendgerätvorrichtung gemäß Anspruch 2, die ferner folgendes Merkmal aufweist:
ein längliches Gehäuse (320), das die Kommunikationsschaltung häust, wobei das Antennenbauelement derart angeordnet ist, dass das planare Leiter-Stück (11) an ein Ende des Gehäuses angrenzend ist.

4. Das Antennenbauelement gemäß Anspruch 1, bei dem die Wicklungsachse der Spulenantenne bei Draufsicht in einer Richtung der Wicklungsachse außerhalb des äußeren Rands des planaren Leiter-Stücks positioniert ist.

5. Das Antennenbauelement gemäß Anspruch 1, bei dem das planare Leiter-Stück ein Masseleiter in einer gedruckten Verdrahtungsplatine ist.

## Revendications

1. Dispositif d'antenne comprenant :
une antenne à cadre (100) qui comprend un conducteur hélicoïdal (21) enroulé autour d'un axe d'enroulement et un corps magnétique (20) agencé au moins à l'intérieur d'une région d'enroulement du conducteur hélicoïdal (21), l'antenne à cadre (100) étant montée de sorte que l'axe d'enroulement passe par son plan de surface de montage ; et
une antenne d'amplificateur qui comprend une pièce de conducteur plane (11) servant d'amplificateur couplé à l'antenne à cadre (100) par le biais d'un champ électromagnétique,
dans lequel une partie du conducteur hélicoïdal (21) et un bord externe de la pièce de conducteur plane (11) se chevauchent au moins en partie lorsqu'ils sont observés sur une vue en plan dans une direction de l'axe d'enroulement,
dans lequel la pièce de conducteur plane (11) est disposée sur une surface externe d'une carte de câblage imprimé (10) ou disposée à l'intérieur de la carte de câblage imprimé (10) et l'antenne à cadre (100) est montée en saillie sur la carte de câblage imprimé (10).

2. Appareil formant terminal de communication comprenant un dispositif d'antenne selon la revendication 1 et un circuit de communication raccordé au dispositif d'antenne.

3. Appareil formant terminal de communication selon la revendication 2, comprenant en outre :
un boîtier allongé (320) qui loge le circuit de communication, dans lequel le dispositif d'antenne est agencé de sorte que la pièce de conducteur plane (11) est adjacente à une extrémité du boîtier.

4. Dispositif d'antenne selon la revendication 1, dans lequel l'axe d'enroulement de l'antenne à cadre est positionné à l'extérieur du bord externe de la pièce de conducteur plane, sur la vue en plan dans une direction de l'axe d'enroulement.

5. Dispositif d'antenne selon la revendication 1, dans lequel la pièce de conducteur plane est un conducteur de terre dans la carte de câblage imprimé.
